# EUROPEAN PATENT APPLICATION

(11) **EP 2 482 245 A1**
(43) Date of publication of application: **01.08.2012**
(21) Application number: 11790005.0
(22) Date of filing: 31.05.2011
(51) Int. Cl.: G06Q 30/00, G06F 17/30

(54) **METHOD FOR MANAGING ADVERTISEMENT AND ADVERTISEMENT MANAGEMENT SERVER**

(30) Priority: 01.06.2010 KR 20100051625; 01.06.2010 KR 20100051624
(71) Applicant: Lee, Jeonggab, Gangnam-gu, Seoul 135-775 (KR)
(72) Inventor: Lee, Jeonggab, Gangnam-gu, Seoul 135-775 (KR)
(74) Representative: Hutter, Jacobus Johannes
(86) International application number: PCT/KR2011/003971
(87) International publication number: WO 2011/152647

(57) **Abstract**

A method and server for managing advertisements are provided. The method and server attract a searcher's attention by a contest among a plurality of items extracted in relation to a search word, give a predetermined benefit according to contest ranks, and provide an advertisement of an advertiser supporting the benefit to the searcher, thereby maximizing advertising effects. The method includes receiving, at a receiver of an advertisement managing server, a search word input by a searcher, providing, at a contest space provider of the advertisement managing server, a contest space to the searcher to hold a contest among a plurality of items related to the search word and including link information, determining, at a contest rank determiner of the advertisement managing server, contest ranks of the items in consideration of the number of links, providing, at a benefit provider of the advertisement managing server, a benefit corresponding to the determined contest ranks, and providing, at an advertisement provider of the advertisement managing server, an advertisement of an advertiser supporting provision of the benefit to the searcher.

## Description

### CROSS-REFERENCE TO RELATED APPLICATION

This application claims priority to Korean Patent Application No. 10-2010-0051624, 10-2010-51625 filed on June 1, 2010, the entire contents of which are incorporated herein by reference.

### BACKGROUND

### 1. FIELD

The present invention relates to a method and server for managing advertisements, and more particularly, to a method and server for managing advertisements to maximize advertising effects.

### 2. DESCRIPTION OF THE RELATED ART

With the rapid development of communication networks, such as the Internet, information retrieval through a communication network is being generalized. In other words, Internet users easily obtain required information at any time in any place using the Internet, and such information retrieval leads to an overall change in daily life.

Thus, a variety of models are being developed as methods of charging for provision of an advertisement between a service provider who provides a retrieval service to an Internet user and an advertiser who provides information on his/her own website to the Internet user through retrieval results.

In an example of a method of charging for provision of an advertisement, positions at which information of advertisers will be displayed on a retrieval result screen are determined in advance, charges for the respective positions are determined, and the positions are sold to advertisers. This method gives an advertiser who first pays a charge for a position at which no information of an advertiser is currently displayed a right to display his/her information. In this method, an advertiser who wants to display his/her information at a specific position should wait until a contract for information of an advertiser displayed at the position runs out.

To solve this problem, a charging method based on a pay per click (PPC) model has been suggested. In the PPC model, the number of times that a user making a retrieval request clicks information of a specific advertiser included in retrieval results and connected with the advertiser is counted to calculate advertising expenses. According to PPC charges (charges per click) suggested by respective advertisers, advertisements of the advertisers are arranged in sequence in a specific area and provided to a user.

In this charging method based on the PPC model, information of an advertiser suggesting the highest PPC charge is disposed at the highest position in the specific area, and advertisers have no choice but to competitively suggest high PPC charges so that their information can be displayed at a relatively better position. Thus, advertising expenses paid by each advertiser constantly increases, and as a result, advertisers giving up on advertisements may increase.

Also, when the disposition orders or positions of advertisements in a specific area on a screen displaying retrieval results are only determined by a contest among advertisers, for example, in order of request or in order of high to low PPC charge as described above, an advertisement unrelated to a requested retrieval may be disposed at the highest position from the viewpoint of a user who has made the retrieval request. In this case, the user may consider retrieval accuracy to be low.

Consequently, it is necessary to introduce an efficient advertising system based on retrieval results which are helpful to users as well as advertisers and can attract users' attention.

### SUMMARY OF THE INVENTION

The present invention is directed to a method and server for managing advertisements which attract a searcher's attention by a contest among a plurality of items extracted in relation to a search word, give a predetermined benefit according to contest ranks, and provide an advertisement of an advertiser supporting the benefit to the searcher to maximize advertising effects.

According to an aspect of the present invention, there is provided a method for managing advertisements including: receiving, at a receiver of an advertisement managing server, a search word input by a searcher; providing, at a contest space provider of the advertisement managing server, a contest space to the searcher to hold a contest among a plurality of items related to the search word and including link information; determining, at a contest rank determiner of the advertisement managing server, contest ranks of the items in consideration of a number of links; providing, at a benefit provider of the advertisement managing server, a benefit corresponding to the determined contest ranks; and providing, at an advertisement provider of the advertisement managing server, an advertisement of an advertiser supporting provision of the benefit to the searcher.

According to another aspect of the present invention, there is provided a server for managing advertisements including: a receiver for receiving a search word input by a searcher; a contest space provider for providing a contest space to the searcher to hold a contest among a plurality of items related to the search word and including link information; a contest rank determiner for determining contest ranks of the items in consideration of a number of links; a benefit provider for providing a benefit corresponding to the determined contest ranks; an advertisement provider for providing an advertisement of an advertiser supporting provision of the benefit to the searcher; a database for storing data about the items and content of the advertisement; and a controller for controlling the receiver, the contest space provider, the contest rank determiner, the benefit provider, the advertisement provider, and the database overall.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain aspects of the invention.
FIG. 1 schematically illustrates a constitution of a system for managing advertisements according to an exemplary embodiment of the present invention;
FIG. 2 is a block diagram of a server for managing advertisements according to an exemplary embodiment of the present invention;
FIG. 3 is a flowchart illustrating a method of managing advertisements according to an exemplary embodiment of the present invention;
FIG. 4 is a table illustrating a method of providing a benefit in a specific operation of FIG. 3; and
FIG. 5 shows a website managed by a server for managing advertisements according to an exemplary embodiment of the present invention.

### DETAILED DESCRIPTION OF EMBODIMENTS

The foregoing and other objects, features, and advantages of the invention are apparent from the following detailed description taken in conjunction with the accompanying drawings

Exemplary embodiments of the present invention capable of achieving the above-described object will be described with reference to the accompanying drawings. The configuration and operation of the present invention shown in and described with reference to the drawings is for illustration purposes only.

Terms used herein are general terms widely used for functions in the present invention, but may be selected according to an intension of those skilled in the art, practice, or new technology. In a specific case, the terms may be selected by the applicant, in which meanings of the selected terms will be described in detailed description of the present invention. It is to be noted that the terms used herein are not simply determined but according to their meanings and the content of the present invention.

Throughout this disclosure, an advertisement refers to a charged non-confronting communication performed to promote a product or service by suggesting existence, characteristics and benefit of the product or service to many people and stimulating the desire or need of consumers, or to increase general reliability of an advertiser. The advertisement may include product advertising for selling a product, idea advertising which is public relations (PR) for promoting a business policy, etc., and so on.

Throughout this disclosure, an advertiser refers to an agent conducting advertising activities. When the advertiser performs advertising through a broadcast medium, the advertiser may include a program provider, that is, a sponsor. Also, the advertiser may include a prospect with whom an advertising agency wants to start a business. The advertiser may be plural in number.

Throughout this disclosure, a battler refers to a person who wants to display his/her item (advertisement) in a contest space to compete with other items.

Hereinafter, a method and server for managing advertisements according to an exemplary embodiment of the present invention will be described in detail with reference to the accompanying drawings.

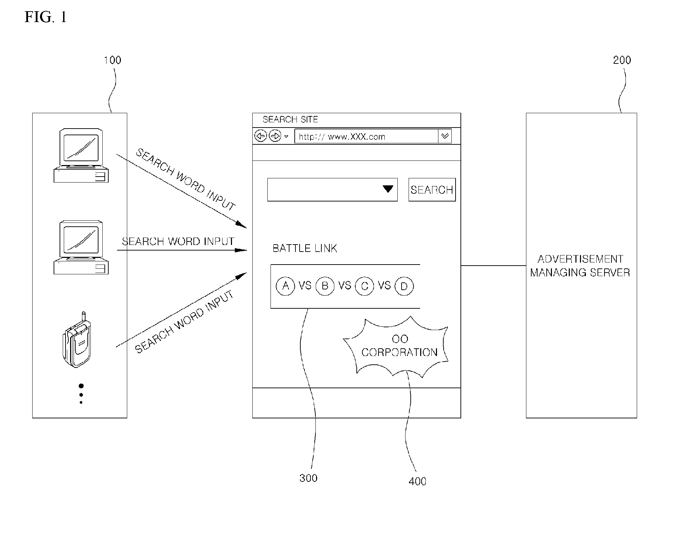

FIG. 1 schematically illustrates a constitution of a system for managing advertisements according to an exemplary embodiment of the present invention.

As illustrated in FIG. 1, a searcher 100 can access a website managed by an advertisement managing server 200 using a terminal in an exemplary embodiment of the present invention. The terminal is an apparatus enabling the searcher 100 to perform retrieval through a communication network, such as the Internet, and to purchase a product. The terminal includes a mobile terminal as well as a fixed terminal.

In other words, the terminal may include a personal computer (PC), laptop PC, cellular phone, smart phone, digital broadcasting terminal, personal digital assistant (PDA), portable multimedia player (PMP), navigation device, e-book terminal, template PC, and so on.

The searcher 100 can access the website through a wired or wireless communication network. When the searcher 100 accesses the website using a mobile communication terminal, a communication network (e.g., a third generation (3G) network or fourth generation (4G) network) of a mobile communication provider or wireless fidelity (WiFi) technology may be used. Using the WiFi technology, the searcher 100 can access the website for free.

The searcher 100 may include a person requesting retrieval through the website managed by the advertisement managing server 200, a user of the website, and a purchaser purchasing a product from the website or another website linked with the website.

When the searcher 100 clicks a specific item to generate a link, the searcher 100 may be described as a clicker. Also, when the searcher 100 purchases a product through a linked website, the searcher 100 may be described as a purchaser.

In an exemplary embodiment of the present invention, the advertisement managing server 200 may manage the entire website for which the searcher 100 may make a retrieval request. Alternatively, the advertisement managing server 200 may manage a contest space 300 only and provide advertisements to the searcher 100.

In the contest space 300, a plurality of items extracted in relation to a search word may be displayed. The items may be randomly displayed in the contest space 300 every time the advertisement managing server 200 receives the input of a new search word. This is intended to maintain fairness of contest arrangements among the items.

In an exemplary embodiment of the present invention, when the contest space 300 is provided to the searcher 100, an advertisement of an advertiser may also be provided to the searcher 100 together. The advertisement of an advertiser may be provided in the form of an advertisement banner 400.

A banner is an advertisement in the shape of a long strip which can be seen on Internet sites. This is a new form of advertising developed to be exposed to Internet users with rapid increase of the Internet users. The advertisement banner 400 may include link information. Thus, when the searcher 100 clicks the advertisement banner 400, a related site may be accessed.

Meanwhile, when the searcher 100 accesses the website using a mobile communication terminal, the advertisement managing server 200 may provide a search interface to the searcher 100 using a mobile web or wireless application protocol (WAP).

A mobile web is browsing technology which allows a mobile terminal to access a wired website. WAP is a communication protocol developed to allow mobile communication devices and mobile terminals, such as a PDA and wireless terminal, to access the Internet.

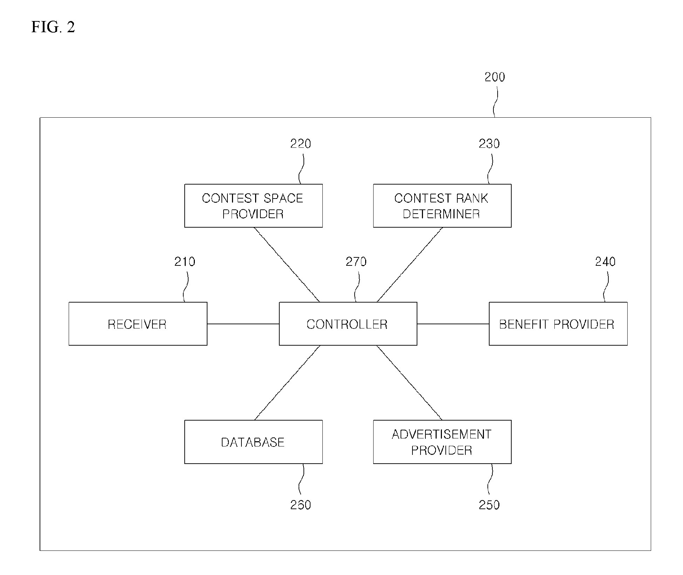

As a result, in an exemplary embodiment of the present invention, the advertisement managing server 200 provides an interface that the searcher 100 uses to perform retrieval through the website, thereby providing the contest space 300 among the items to the searcher 100. The constitution of the advertisement managing server 200 will be described in detail below with reference to FIG. 2.

FIG. 2 is a block diagram of a server for managing advertisements according to an exemplary embodiment of the present invention.

In an exemplary embodiment of the present invention, a receiver 210 of the advertisement managing server 200 may receive an input search word from the searcher 100. In this case, the searcher 100 inputs the search word through the terminal.

In an exemplary embodiment of the present invention, a contest space provider 220 of the advertisement managing server 200 may provide the contest space 300 to the searcher 100 so that a plurality of items related to the search word and including link information can compete with each other.

The items may be specific products or services related to the search word, or stores providing the specific products or services. The stores may include Internet shopping malls or open markets.

An Internet shopping mall refers to a virtual store present in a virtual space. An Internet shopping mall requires almost no operating cost, has no limit in its business area, and can provide information on products suited to consumers' preference.

An open market refers to an intermediary Internet shopping mall in which individuals, retail dealers, etc. buy and sell products online, unlike a sales method of general shopping malls. In other words, there may be a plurality of sellers in an open market. Open markets can remove the distribution margin of Internet shopping malls, and thus it is possible to sell products at a relatively low price.

In an exemplary embodiment of the present invention, the items may be vertically displayed in the contest space 300. In this case, the items may be randomly extracted every time a new search word is input, and positions in the contest space 300 may vary. This is intended to provide equal advertising effects between the items.

In another exemplary embodiment of the present invention, the items may be horizontally displayed in the contest space 300. Also in this case, the advertisement managing server 200 may randomly display the items in the contest space 300 to maintain fairness every time a new search word is input.

Alternatively, the items may be displayed in a circular form in the contest space 300, or in several rows and columns. Also in this case, the items may be randomly displayed in the contest space 300 to maintain fairness.

Meanwhile, in an exemplary embodiment of the present invention, when contest ranks of the items are determined according to popularity and sales records, the advertisement managing server 200 may display a high-rank item at a position having high effect in the contest space 300. This is because it is possible to provide customized advertisements needed by customers.

In an exemplary embodiment of the present invention, a contest rank determiner 230 may determine the contest ranks of the items in consideration of at least one of the number of links and sales records.

The number of links may denote a case in which a link is generated through link information included in the items, or a case in which a link is generated through link information included in the items and a specific product is purchased. As a result, the number of links may denote the number of clicks for a specific one of the items.

A sales record may denote the number of products or services purchased by the searcher 100 after the searcher 100 selects one of the items present in the contest space 300, generates a link through link information included in the selected item, and accesses a linked website.

Meanwhile, the contest ranks according to the number of links or sales records may be determined in consideration of the number of times that the items are exposed in the contest space 300.

The contest rank determiner 230 may determine the contest ranks of the items in real time or according to specific time periods. For example, when a contest proceeding time is determined to be 24 hours from the present time, the contest rank determiner 230 may determine contest ranks of the items corresponding to a point in time when the searcher 100 purchased a product. In another exemplary embodiment, the contest rank determiner 230 may determine the contest ranks every week or month.

Alternatively, the contest rank determiner 230 may extract only one item having the highest score in consideration of the number of links or sales records to determine the item as a winning item, and may not determine the ranks of other items. Also, the contest rank determiner 230 may calculate scores of all the items and determine relative ranks of all the items.

In an exemplary embodiment of the present invention, a benefit provider 240 of the advertisement managing server 200 may provide benefits corresponding to the determined contest ranks.

Throughout this disclosure, a benefit refers to a bonus that can be given to a specific item winning the contest among the items. The benefit may include discount of a product or service, reservation of reserve-funds, provision of a discount coupon, accumulation of mileage, provision of a free gift, provision of a gift certificate, provision of game money, and so on.

The benefit may be given to the searcher 100 who generates a link through link information included in the item, accesses a linked website, and purchases a product or service. Also, the benefit may be given to a seller of the item winning the contest. When the benefit is given to the seller, the benefit may additionally include a discount on the bid price, a discount on the sales commission, an advertising priority, and so on.

Meanwhile, the benefit provider 240 may also provide a predetermined benefit to a searcher (clicker) who generates a link through link information included in the item but does not purchase a product. For example, when the searcher 100 selects (clicks) an item A from among the items to generate a link, the benefit provider 240 may also provide a benefit, such as accumulation of shopping points or mileage, or provision of a discount coupon, to the searcher 100 even if the searcher 100 does not purchase the item A. This is because the advertising purpose of the advertiser is achieved when the linked site is accessed.

When the contest rank determiner 230 determines contest ranks according to specific time periods (e.g., every week or month), the benefit provider 240 may provide the benefit to the purchaser 100 or the seller related to the item winning the contest at a point in time when the specific time period expires.

Also, when the contest rank determiner 230 determines contest ranks every time a product is purchased, the benefit provider 240 may provide the benefit to the purchaser 100 in real time.

For example, a contest proceeds for 24 hours, and seven hours remain until the end. It is assumed that the first-rank item is the item A according to a result determined by the contest rank determiner 230 currently, that is, seven hours before the end. The searcher 100 may access a website linked with the item A to purchase the item A, and may be provided with a benefit (e.g., discount on the product price) corresponding to the first rank determined at the time point of purchasing in real time.

However, when the contest rank determiner 230 determines contest ranks as soon as 24 hours pass, the purchaser 100 cannot know at the time point of purchasing whether or not it is possible to receive a benefit, and is provided with the benefit, such as accumulation of shopping points, after the contest proceeding time passes.

In an exemplary embodiment of the present invention, the benefit provider 240 may provide the benefit to only a purchaser and seller related to one item winning the contest according to the contest results.

In another exemplary embodiment, the benefit provider 240 may differentially provide the benefit to purchasers, sellers, etc. related to the respective items according to ranks of the items.

Meanwhile, the benefit provider 240 may suggest various benefits to the searcher 100 or the seller related to the item winning the contest, so that the searcher 100 or the seller can select a specific benefit.

In an exemplary embodiment of the present invention, an advertisement provider 250 of the advertisement managing server 200 may provide an advertisement of an advertiser supporting provision of the benefit to the searcher 100.

The advertisement provider 250 may expose an advertisement of the advertiser in the form of the advertisement banner 400 on the website. The advertisement banner 400 may be expressed as a motion picture including text and images. The advertisement provider 250 may cause the size of the advertisement banner 400 to be automatically adjusted. Also, the advertisement banner 400 includes link information, and thus may lead to a related site when the advertisement banner 400 is clicked.

The position of the advertisement banner 400 can be adjusted on the website. A controller 270 of the advertisement managing server 200 may set the position of the banner 400 to be automatically changed according to a specific time slot.

Unlike the items, an advertisement of the advertiser may be irrelevant to the search word. Thus, an advertisement of the advertiser may be always exposed on the website regardless of which keyword is input for retrieval by the searcher 100. For this reason, the advertisement managing server 200 can provide the best advertising effect to the advertiser. Here, the advertiser needs to support the benefit according to the contest ranks instead of advertising expenses.

Meanwhile, when the contest space provider 220 provides the contest space 300 to the searcher 100, the advertisement provider 250 may provide an advertisement of the provider together with the contest space 300. In other words, the advertisement banner 400 may be displayed adjacent to contest space 300.

In an exemplary embodiment of the present invention, a database 260 of the advertisement managing server 200 may store data about the items for providing retrieval results according to a search word input by the searcher 100. Also, the database 260 may store content that the advertiser wants to advertise. The advertise content may include link information, product information, and so on.

Further, the database 260 may contain information on the benefit to be provided to the searcher 100, seller, etc. The information on the benefit may include discount rates according to contest ranks, how to provide a coupon, how to accumulate shopping points and mileage, information on a gift certificate, a free gift, and a prize, and so on.

In an exemplary embodiment of the present invention, the controller 270 of the advertisement managing server 200 may control the receiver 210, the contest space provider 220, the contest rank determiner 230, the benefit provider 240, the advertisement provider 250, and the database 260 overall.

Also, the controller 270 may control the items to be randomly displayed in the contest space 300. This is intended to ensure fairness of contest ranks of the items.

Meanwhile, the controller may extract the items from among bid items in consideration of bid prices (advertising expenses) and popularity. A bid price refers to a price suggested for bidding by a battler who wants to display his/her item in the contest space 300.

The popularity is a basis for extracting the items to be displayed in the contest space 300, and irrelevant to the contest ranks of the items.

The popularity may be evaluated in consideration of click through rates of the searcher 100, sales records, the number of recommendations, registration of product evaluations, etc., related to the items before the items are extracted.

A click through rate denotes a ratio of the number of clicks to the number of exposures. In other words, the click through rate may be defined as "the number of clicks/the number of exposures."

The term "exposure" denotes that an item is displayed to the searcher 100 so that the item can be clicked. For example, when the searcher 100 visits a site related to an item once through an Internet browser, the advertisement managing server 200 may record that exposure has occurred once. A specific program may record occurrence of exposures.

Also, the term "the number of clicks" denotes the number of times the searcher 100 clicks on an item. For example, when the searcher 100 clicks an item, information indicating that a purchase button, a news title, etc. has been clicked and information indicating a page accessed by clicking may be recorded in the advertisement managing server 200. The advertisement managing server 200 may record the click-related information by a specific program.

On the basis of the click-related information, the advertisement managing server 200 may check whether or not an item has been clicked, the number of clicks, whether or not a linked site is accessed, and so on. Also, the advertisement managing server 200 may expose the item according to position on the website, thereby checking position-specific average click through rates.

A method for efficiently displaying an advertisement of the advertiser using the respective components of the advertisement managing server 200 will be described below.

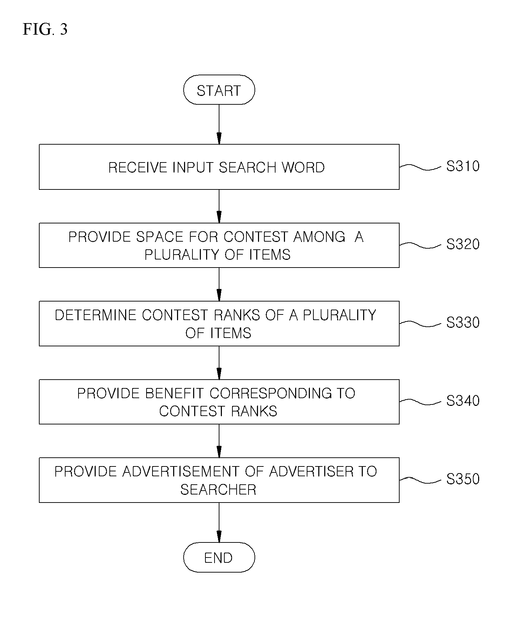

FIG. 3 is a flowchart illustrating a method of managing advertisements according to an exemplary embodiment of the present invention.

The receiver 210 may receive a search word input by the searcher 100 (operation 310). The controller 270 may extract a plurality of items related to the search word in response to the received search word. In this case, the items may be extracted in consideration of bid prices and popularity.

For example, the controller 270 may compare only bid prices of the items and extract five items in order of high to low bid price. Also, the controller 270 may take bid prices and popularity of the items into consideration by 30 % and 70 % respectively, thereby extracting five high-rank items. Further, the controller 270 may take only popularity of the items into consideration, thereby extracting five high-rank items.

When the controller 270 extracts the items in consideration of bid prices alone, a company administering the advertisement managing server 200 may benefit from this case, but the searcher 100 may not obtain a desired search result.

On the other hand, when the controller 270 extracts the items in consideration of popularity alone, the advertisement managing server 200 may provide customized advertisements to the searcher 100. However, this case may disadvantage a battler who bids a high price to display his/her item.

Thus, in an exemplary embodiment of the present invention, the controller 270 appropriately takes bid prices and popularity into consideration according to circumstances to extract items to be displayed in the contest space 300.

The contest space provider 220 may provide the contest space 300 to the searcher 100, so that a contest can be held among the extracted items (operation 320). In an exemplary embodiment of the present invention, the items may be displayed in various forms, such as a vertical line, horizontal line, and circle, in the contest space 300. However, in consideration of fairness, the items may be randomly displayed every time a new search word is input.

Thus, in an exemplary embodiment of the present invention, the advertisement managing server 200 may charge the same bid price for the items. For example, when battlers who want to display their items (advertisements) in the contest space 300 bid different prices, the advertisement managing server 200 may equalize bid prices as the maximum bid price, minimum bid price, average bid price, etc. for the extracted items.

Meanwhile, the controller 270 may change the positions of the items in the contest space 300 in consideration of popularity of the items. For example, the controller 270 may control an item, which is most frequently clicked, to be displayed at a position having the highest advertising effect in the contest space 300 in real time. In this case, the advertisement managing server 200 may provide retrieval convenience to the searcher 100, the clicker, and the purchaser.

Also, the controller 270 may control an item having high popularity to be displayed at an exposure position that the corresponding battler wants.

The items may include products, services, stores, and so on. For example, the searcher 100 may input a keyword "laptop." When the items are products, a laptop PC A, a laptop PC B, a laptop PC C, a laptop PC D, a laptop PC E, etc. may be extracted for a contest according to type of laptop PCs. Also, when the items are services, a repair shop A, a repair shop B, a repair shop C, a repair shop D, a repair shop E, etc. may be extracted for a contest. And, when the items are stores, a company A, a company B, a company C, a company D, a company E, etc. may be extracted for a contest. The stores may include an open market.

The contest rank determiner 230 may determine contest ranks of the items (operation 330). The contest ranks may be determined in consideration of at least one of sales records and the number of links.

For example, the contest rank determiner 230 may determine the contest ranks in consideration of only the number of links (clicks) of the items or only the sales records of the items. Also, the contest rank determiner 230 may take the number of links (clicks) and the sales records into consideration by 35 % and 65 % respectively, thereby determining the contest ranks.

The advertisement managing server 200 may provide the contest ranks to the searcher 100 in real time. Even if the searcher 100 knows the contest ranks, he/she may not purchase a high-rank item, but the advertisement managing server 200 may provide the searcher 100 with data, to which he/she can refer to determine whether or not to make a purchase, as a free service. In this case, the searcher 100 may select and purchase a high-rank item to receive a benefit, or may give up the benefit and select and purchase an item that he/she wants.

Since the contest ranks may be very useful reference data for the searcher 100, the advertisement managing server 200 may provide the contest ranks to only the searcher 100 satisfying a specific condition according to an exemplary embodiment of the present invention.

For example, the advertisement managing server 200 may provide the contest ranks to only the searcher 100 who has become a paid member among the searchers 100. In this case, the advertisement server 200 may lead the searchers 100 to become paid members, and also obtain personal information on the searchers 100 from membership registration information.

In an exemplary embodiment of the present invention, the benefit provider 240 may provide benefits corresponding to the determined contest ranks (operation 340). The benefit provider 240 may differentially provide a predetermined benefit to clickers, purchasers, sellers, etc. related to the respective items according to the contest ranks.

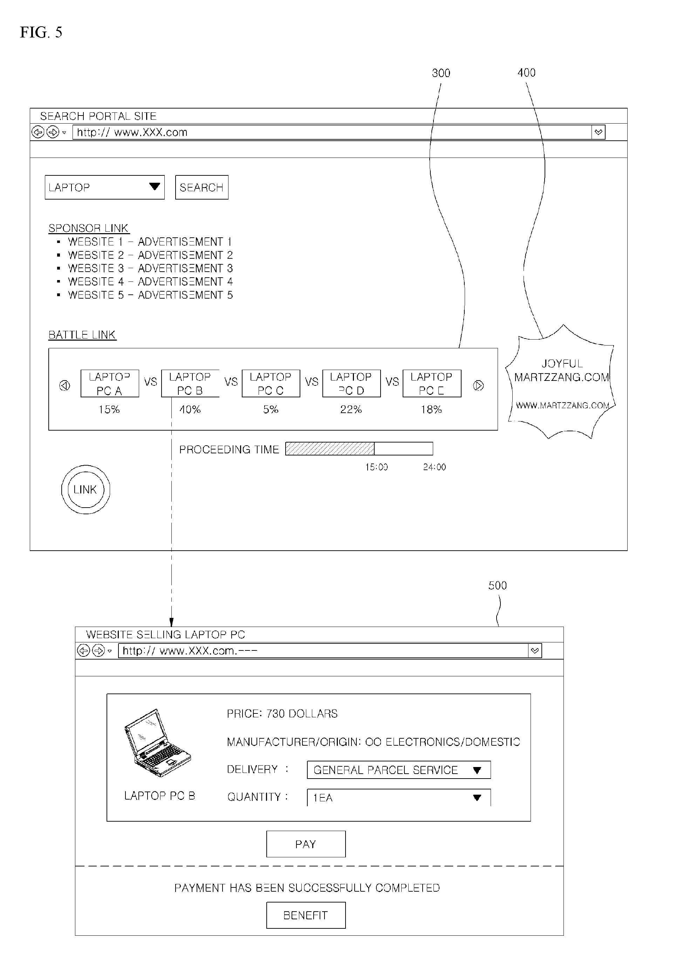

Alternatively, the benefit provider 240 may provide a predetermined benefit to only a clicker, the searcher 100, a seller, etc. related to the highest-rank item. This will be described in detail later with reference to FIG. 5.

Meanwhile, in an exemplary embodiment of the present invention, a clicker who has clicked the advertisement banner 400 of the advertiser and a purchaser who has purchased a product from a site linked by link information included in the banner 400 may be provided with a greater benefit than a clicker and purchaser related to an item in the contest space 300. Since the advertiser provides the benefit to the searcher 100 for the purpose of advertising, advertising effects can be increased by giving the greater benefit to a clicker of the advertisement banner 400 of the advertiser and a purchaser.

In an exemplary embodiment of the present invention, the advertisement provider 250 may provide an advertisement of an advertiser who supports provision of the benefit to the searcher 100 (operation 350). The advertisement may be exposed on the website managed by the advertisement managing server 200 in the form of the advertisement banner 400 and thereby provided to the searcher 100. The advertisement banner 400 may include link information for a related site. The searcher 100 may click the advertisement banner 400, thereby moving to a website related to the advertisement.

The advertisement banner 400 is irrelevant to the search word input by the searcher 100, and may be provided to the searcher 100 when the contest space 300 is provided. The position of the advertisement banner 400 may be fixed or freely selected by the advertiser.

Meanwhile, FIG. 3 illustrates an exemplary embodiment of the present invention, and a method of managing advertisements according to an exemplary embodiment of the present invention is not limited to the sequence of FIG. 3. In particular, the operation (operation 350) in which the advertisement provider 250 provides an advertisement of an advertiser supporting provision of the benefit to the searcher 100 may be present independently of the other operations (operations 310 to 340).

An operation in which the benefit provider 240 provides the benefit to the searcher 100 will be described in detail below.

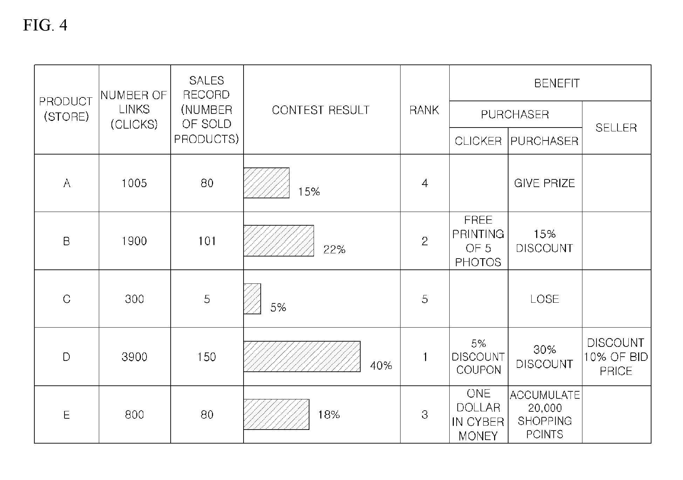

FIG. 4 is a table illustrating a method of providing a benefit in a specific operation (operation 340) of FIG. 3.

As shown in FIG. 4, in an exemplary embodiment of the present invention, the benefit may be differentially provided according to contest ranks. The contest ranks may be determined in consideration of at least one of the number of links and sales records. In other words, the contest ranks may be determined in consideration of the number of links or sales records alone, or both of the two factors.

For example, when products A, B, C, D and E are present in the contest space 300 and the searcher 100 clicks the product D to generate a link, the contest rank of the product D may be increased. Also, when the searcher 100 clicks the product D to generate a link and purchases the product D from a linked site, the contest rank of the product D may be increased.

When the product D is placed first as a result of the contest, the benefit provider 240 may provide a specific benefit to a clicker who has clicked the product D or a purchaser who has purchased the product D.

Also, when the product D is placed first, the product B is placed second, the product E is placed third, the product A is placed fourth, and the product C is placed fifth, the benefit provider 240 may differentially give a benefit to the searcher 100 related to the product D and also to the searchers 100 related to other products. For example, the benefit provider 240 may provide a 30 % discount coupon to the searcher 100 who has purchased the product D, the first-rank product, a 15 % discount coupon to the searcher 100 who has purchased the product B, the second-rank product, 20000 shopping points to the searcher 100 who has purchased the product E, the third-rank product, a T-shirt as a prize to the searcher 100 who has purchased the product A, the fourth-rank product, and no benefit to the searcher 100 who has purchased the product C, the fifth-rank product.

Meanwhile, in an exemplary embodiment of the present invention, the benefit provider 240 may also provide a benefit to a clicker who does not purchase the items but only generates a link. For example, the benefit provider 240 may provide a 5 % discount coupon to a clicker who has clicked the product D, the first-rank product. Also, the benefit provider 240 may provide a coupon for printing photographs online for free to a clicker who has clicked the product B, the second-rank product, and one dollar in cyber money to a clicker who has clicked the product E, the third-rank product.

In an exemplary embodiment of the present invention, the benefit provider 240 may provide a greater benefit to the searcher 100 who has clicked the advertisement banner 400 of the advertiser or the searcher 100 who has generated a link of the advertisement banner 400 and purchased a product from a linked site than the searcher 100 who has clicked the items to generate links.

Meanwhile, the benefit provider 240 may provide a benefit to a purchaser who has purchased a product and also to a seller who has sold the product. The benefit provided to the seller may include a discount on a bid price.

The benefit provider 240 may give a specific benefit only to a seller who has sold the product D, the first-rank product as a result of the contest. In another exemplary embodiment, the benefit provider 240 may differentially distribute a benefit to sellers of the second-rank product B, the third-rank product E, the fourth-rank product A, and the fifth-rank product C as well as the product D according to the contest ranks.

FIG. 5 shows a website managed by an advertisement managing server according to an exemplary embodiment of the present invention.

As shown in FIG. 5, in an exemplary embodiment of the present invention, when the searcher 100 inputs a search word "laptop" through the website, the receiver 210 may receive the input search word.

The advertisement managing server 200 may display information related to the search word to the searcher 100 through the web site. In this case, the controller 270 of the advertisement managing server 200 may extract five products from laptop PCs of various companies in order of bid price and popularity. The five products may be displayed in the contest space 300 provided by the contest space provider 220. The five laptop PCs may be randomly displayed according to the input search word.

The advertisement managing server 200 may inform the searcher 100 of a contest proceeding time through the website. When the contest is held in a specific time slot, the advertisement managing server 200 may display the time slot on the website (e.g., 14:00 - 22:00).

Also, the advertisement managing server 200 may provide the contest ranks of a plurality of items in the contest space 300 to the searcher 100 in real time. This is intended to enable the searcher 100 to click and purchase a product in consideration of a benefit to be received.

Laptop PCs A to E present in the contest space 300 may be displayed in the form of text, icons, motion pictures, and so on.

In an exemplary embodiment of the present invention, when the searcher 100 selects and clicks the laptop PC B, a link is generated, and a website 500 selling the laptop PC B may be accessed. When the searcher 100 accesses the website 500 through the link and purchases the laptop PC B, the contest rank of the laptop PC B may be increased. Also, when the laptop PC B wins the contest, the benefit provider 240 may provide a specific benefit to a clicker, purchaser, and seller of the laptop PC B.

In this way, the searcher 100 may be provided with various benefits in comparison with a case in which he/she purchases a product from another site, and thus the website may be useful for purchasing a product. Also, a seller can advertise a product through the contest space 300 and efficiently lead the searcher 100 to make a purchase, and thus advertising effects and profit may increase.

Meanwhile, a benefit provided to the searcher 100 and a seller is supported by an advertiser. Thus, when the contest space 300 is provided to the searcher 100 regardless of a search word, an advertisement of the advertiser may be provided together in the form of an advertisement banner 400. For example, as shown in FIG. 5, Martzzang.com is a company unrelated to laptop PCs, but can be exposed with the contest space 300 by supporting the benefit. The searcher 100 may also access a website related to an advertisement of the advertiser through link information included in the advertisement banner 400.

In this case, the benefit provider 240 may provide a great benefit to the searcher 100 who has clicked the advertisement banner 400 of the advertiser or the searcher 100 who has generated a link of the advertisement banner 400 and purchased a product from a linked site.

As described above, it is possible to provide contest arrangements among a plurality of items extracted in relation to a search word according to an exemplary embodiment of the present invention.

Also, benefits are provided according to determined contest ranks, and thus it is possible to attract a searcher's attention.

Meanwhile, an advertisement of an advertiser supporting the benefits is provided to the searcher according to an exemplary embodiment of the present invention. Thus, the searcher may have a good image of the advertiser, and effective advertising is enabled.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method of managing advertisements, comprising:
receiving, at a receiver of an advertisement managing server, a search word input by a searcher;
providing, at a contest space provider of the advertisement managing server, a contest space to the searcher to hold a contest among a plurality of items related to the search word and including link information;
determining, at a contest rank determiner of the advertisement managing server, contest ranks of the items in consideration of a number of links;
providing, at a benefit provider of the advertisement managing server, a benefit corresponding to the determined contest ranks; and
providing, at an advertisement provider of the advertisement managing server, an advertisement of an advertiser supporting provision of the benefit to the searcher.

2. The method of claim 1, wherein the items are extracted by a controller of the advertisement managing server on the basis of bid prices.

3. The method of claim 1, wherein the advertisement of the advertiser is irrelevant to the search word, and is provided together with the contest space when the contest space provider provides the contest space to the searcher.

4. The method of claim 1, wherein the controller of the advertisement managing server randomly displays the items in the contest space every time the receiver of the advertisement managing server receives a search word input by a searcher.

5. The method of claim 1, wherein the benefit provider provides the benefit to the searcher clicking at least one of the items.

6. A server for managing advertisements, comprising:
a receiver for receiving a search word input by a searcher;
a contest space provider for providing a contest space to the searcher to hold a contest among a plurality of items related to the search word and including link information;
a contest rank determiner for determining contest ranks of the items in consideration of a number of links;
a benefit provider for providing a benefit corresponding to the determined contest ranks;
an advertisement provider for providing an advertisement of an advertiser supporting provision of the benefit to the searcher;
a database for storing data about the items and content of the advertisement; and
a controller for controlling the receiver, the contest space provider, the contest rank determiner, the benefit provider, the advertisement provider, and the database overall.

7. The server of claim 10, wherein the controller of the advertisement managing server extracts the items on the basis of bid prices.

8. The server of claim 10, wherein the advertisement of the advertiser is irrelevant to the search word, and is provided together with the contest space when the contest space provider provides the contest space to the searcher.

9. The server of claim 10, wherein the controller randomly displays the items in the contest space every time the receiver receives a search word input by a searcher.

10. The server of claim 10, wherein the benefit provider provides the benefit to the searcher clicking at least one of the items.
